# EUROPEAN PATENT APPLICATION

(11) **EP 2 708 105 A2**
(43) Date of publication of application: **19.03.2014**
(21) Application number: 13183210.7
(22) Date of filing: 05.09.2013
(51) Int. Cl.: A01C 21/00, A01C 7/10

(54) **Monitoring device and product distribution system with such**

(30) Priority: 14.09.2012 US 201213619454
(71) Applicant: Deere & Company, Moline, IL 61265-8098 (US)
(72) Inventor: Liu, James Z., Venice, FL Florida 34292 (US)
(74) Representative: Münch, Christian

(57) **Abstract**

A monitoring device and a product distribution system (34) with such is shown. The system is shown as embodied in an agricultural air seeder (10) in which a mass flow sensor (200, 220, 230) is used to measure the product flow through only a portion of a product flow passage (38, 50, 58, 84, 124) wherein the total mass flow is calculated from the portion that is measured. Furthermore, the output signal from the mass flow sensor is used to determine if a device (40) used for section control is functioning properly.

## Description

The invention relates to a monitoring device for a product distribution system. The invention further relates to a product distribution system comprising a container for holding a product to be distributed, a meter assembly for controlling discharge of product from the container, a flow control means for selectively stopping and starting the flow of product through the product flow passages and said monitoring device.

During operation of a product distribution system such as an air seeder, it is a known practice to control the flow of product which is delivered by a product meter from the tank into the product distribution lines. It is known to use mass flow sensors to measure the product flow rate in real time. However, the known measuring devices and methods may have limitations and may not be able to accurately measure the product flow rates in all conditions.

It is an object of the invention to overcome above mention problems.

The object will be achieved by the teaching of independent claims 1 and 8. Further advantageous solutions will be defined in the accompanying claims.

Accordingly, a monitoring system of above mentioned type comprises a plurality of flow sensors adapted to measure product flow through product flow passages of a product distribution system, each sensor generating an output signal indicative of the flow rate of product past the sensor, and a controller adapted to receive the sensor output signals and calculate a total mass flow through said passages. A plurality of flow sensors are adapted to measure product flow through the product flow passages, each sensor generating an output signal indicative of the flow rate of product past the sensor; and a controller adapted to receive the output signals from the sensors, to send control signals to the control means to stop and start the flow of product through the product flow passages, the controller further adapted to compare the product flow rate through each product flow passage to an expected product flow rate to determine an operational status of the flow control means.
Fig. 1 is a side elevational view of an air seeder and tiling implement;
Fig. 2 is a perspective view of the seed meter shown in Fig. 1;
Fig. 3 is an exploded perspective view of the meter cartridge illustrating one meter casing and one roller segment separated from the cartridge;
Fig. 4 is a perspective view of the seed meter casing illustrating the gate in the closed position;
Fig. 5 is a perspective view of the seed meter casing shown in Fig. 4 illustrating the gate in the open position;
Fig. 6 is a side sectional view of the seed meter of the air seeder shown in Fig. 1;
Fig. 7 is a perspective view of the primary distribution manifold;
Fig. 8 is a sectional view of the primary distribution manifold of Fig. 7;
Fig. 9 is a fragmentary sectional perspective view of a portion of the distribution manifold of Fig. 7;
Fig. 10 is a sectional view of the flow cavity showing the product flow rate sensor;
Fig. 11 is a sectional view of the flow cavity showing an alternative embodiment of the product flow rate sensor;
Fig. 12 is a sectional view of the secondary distribution tower showing an impact sensor therein; and
Fig. 13 is a schematic diagram of the control system for the product distribution system.

A product distribution system and method of distributing a product is provided and described below. One application of such a device and method is in an agricultural air seeder.

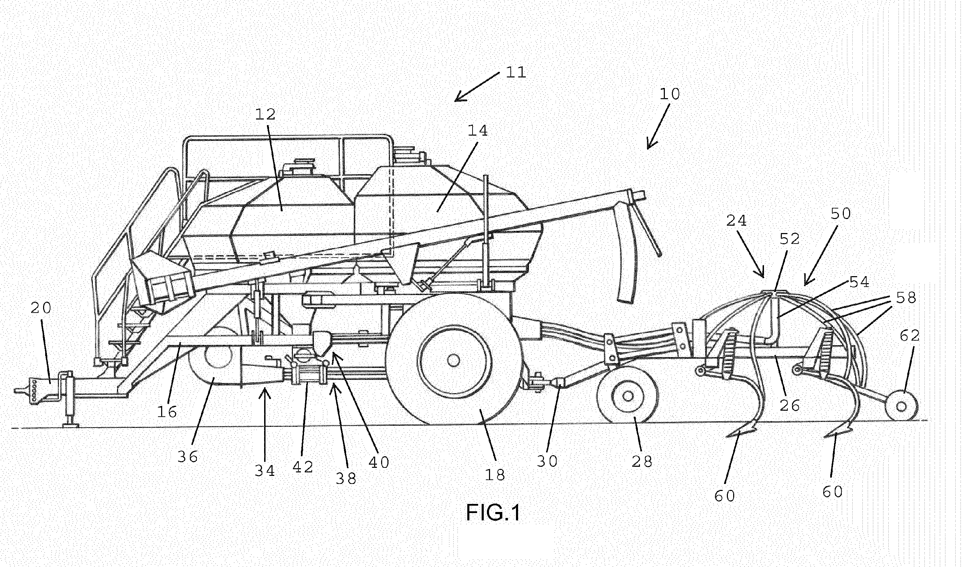

Referring to Fig. 1 an agricultural seeding and fertilizing implement 10 commonly referred to as an air seeder is shown. Implement 10 includes and air cart 11 having containers or tanks 12 and 14 for containing products to be distributed to the soil. The tanks 12 and 14 are mounted on a frame 16 supported by ground wheels 18 for forward movement over the ground by a towing vehicle (not shown) connected to a forward tongue 20. Any number of tanks can be provided on the air cart. A ground-engaging tool 24 includes a frame 26 supported by ground wheels 28 and connected to the rear of the air cart frame 16 by a tongue 30. Alternative arrangements may place the ground engaging implement in front of the air cart 11 or the air cart and the ground engaging tool can be combined onto a common frame. The tanks 12 and 14 can be any suitable device for holding the material to be dispensed. They could be hoppers, bins, boxes, containers, etc. The term "tank" shall be broadly construed herein. Furthermore, one tank with multiple compartments can also be provided.

An air distribution system 34 includes a fan 36 connected and a product delivery conduit structure having multiple product distribution conduits 38. The fan 36 directs air through the conduits 38. A product metering assembly 40, located at the bottom of each tank 12 and 14, only one of which is shown in Fig. 1, delivers the products from the tanks 12 and 14 through cavities in the meter housing and in the distribution manifold into the product delivery conduits 38. As will be described below, there is one conduit 38 associated with each cavity in the meter housing and the manifold. The particular type of meter is not important to the apparatus, however, in most instances, the meter will be a volumetric meter. An example of such a distribution system 34 is the John Deere 1910 Commodity Air Cart which is shown in detail in US Patent No. 6,213,698, incorporated herein by reference.

Each conduit carries product rearwardly in the air stream to a secondary distribution tower 50. Typically, there will be one tower 50 for each conduit 38. Each tower 50 includes a secondary distributing manifold 52 located at the uppermost end of a vertical tube 54. The distributing manifold 52 divides the flow of product into a number of secondary distribution lines 58. Each secondary distribution line 58 delivers product to one of a plurality of openers 60 attached to the frame 26 at transversely spaced locations to deposit the product in the ground. A firming or closing wheel 62 associated with each opener 60 trails the opener and firms the soil over the product deposited in the soil. The implement 10 may be equipped with separate conduits 38 for each of the tanks 12 and 14 whereby different products can be distributed separately. Alternatively, the products from tanks 12 and 14 can be combined in the same conduits 38 for distribution together. In other embodiments of the distribution system, the conduits 38 may be selectively configurable to combine the products from tanks 12 and 14 into common conduits or to keep the products separate in different conduits 38.

The cavities 84 in the meter housing, the cavities 124 in the distribution manifold, the product delivery conduits 38, the towers 50 and the secondary distribution lines 58 constitute product flow passages through which product flows downstream of the meter.

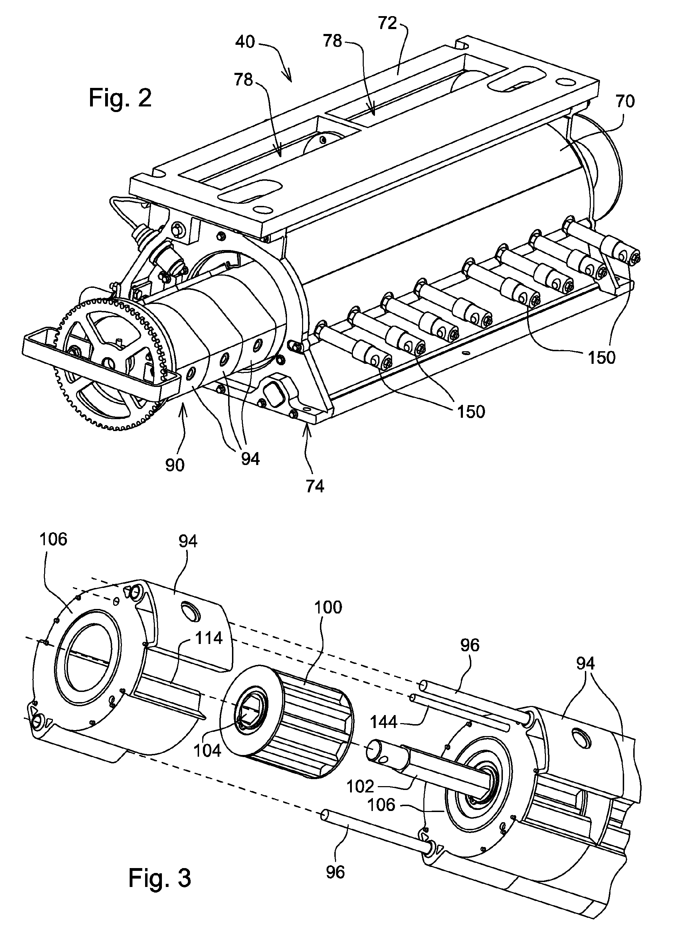

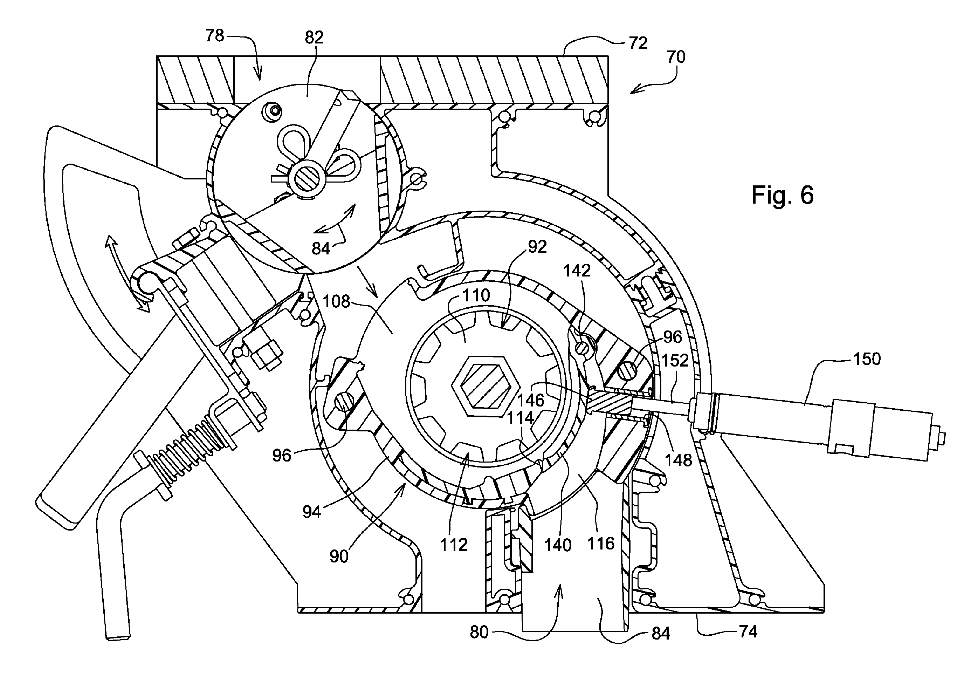

The metering system 40 will now be described in greater detail with reference to Figs. 2-6. Metering system 40 includes a meter housing 70 having an upper end 72 that is coupled to the lower end of the product tank 12. The housing 70 further has a lower end 74 that is coupled to the primary manifold 42 of the pneumatic distribution system. The housing 70 forms an inlet passage 78 through which product is received into the housing and an outlet passage 80 having cavities 84 through which metered product is delivered to the distribution system. A rotary cut off valve 82 is placed in the inlet passage 78 and can be rotated as shown by the arrow 84 from the open position shown in Fig. 6 to a cleanout position in which product is discharged from the housing 70 to enable the product tank 12 to be emptied without the product flowing through the metering system to the distribution system.

The inlet passage 78 leads to a meter cartridge 90 which houses a meter roller 92. The cartridge 90 is removable from the meter housing 70 as shown in Fig. 2 where the cartridge 90 is shown partially withdrawn from the meter housing 70. The cartridge 90 consists of a plurality of meter casings 94 placed adjacent to one another and fastened together by elongated bolts 96, Fig. 3, extending through apertures 98 in the meter casings. The meter roller 92 is constructed of a plurality of roller segments 100 axially positioned along a shaped drive shaft 102. In the embodiment shown, the drive shaft 102 is hex shaped to mate with the hex shaped bore 104 in the roller segments 100. Additional attaching hardware is shown and described in US Patent No. 5,878,679 incorporated herein by reference.

Each roller segment 100 is disposed within a separate meter casing 94. Each meter casing 94 has a radial wall 106 along one axial end of the casing 94 that separates adjacent roller segments 100 from one another axially along the shaft 102. Each casing 94 defines an inlet 108 in communication with the inlet passage 78 of the meter housing 70 for receiving product therefrom. As the meter roller 92 rotates, as shown by the arrow 110 in Fig. 6, product is displaced by the teeth and grooves 112 of the rollers, over the ledge 114 to the outlet 116 in the meter casing. From there product flows to the outlet passage 80 in the meter housing and to the manifold 42 of the distribution system 34.

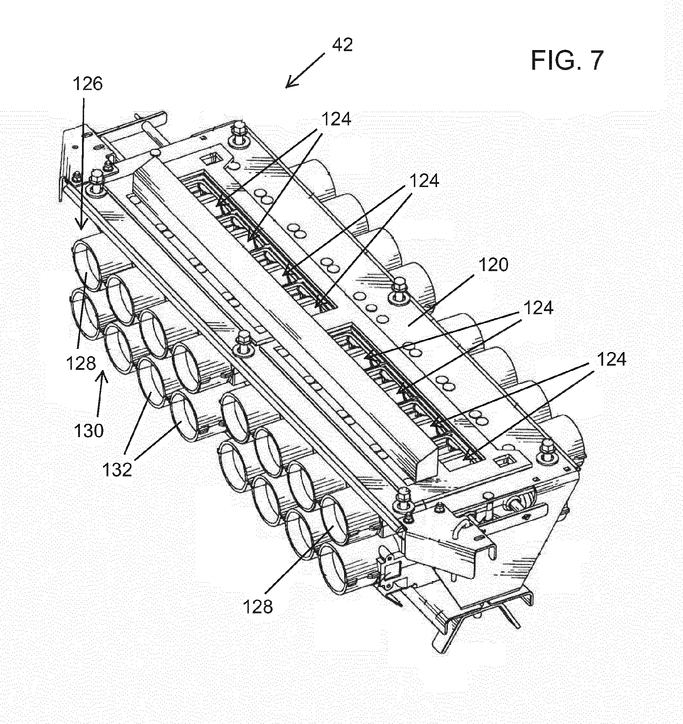

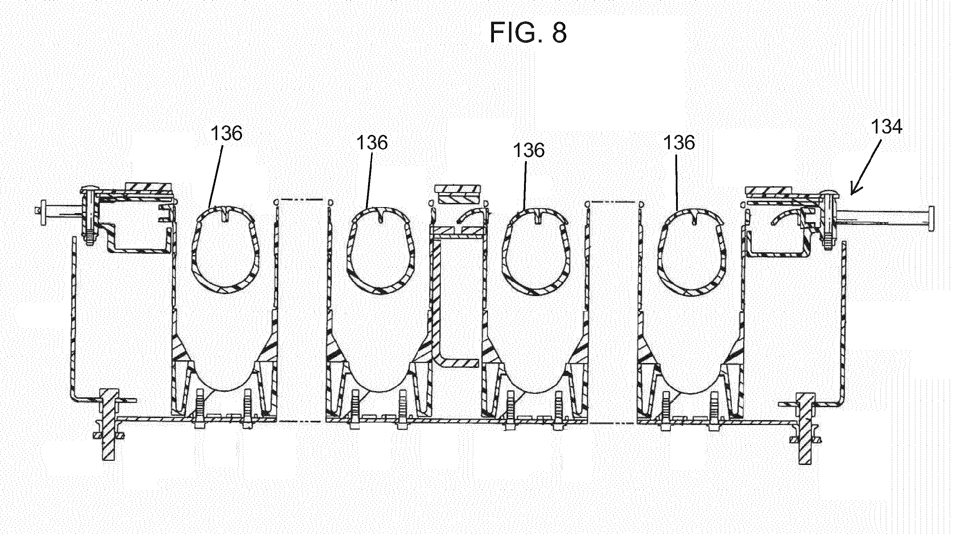

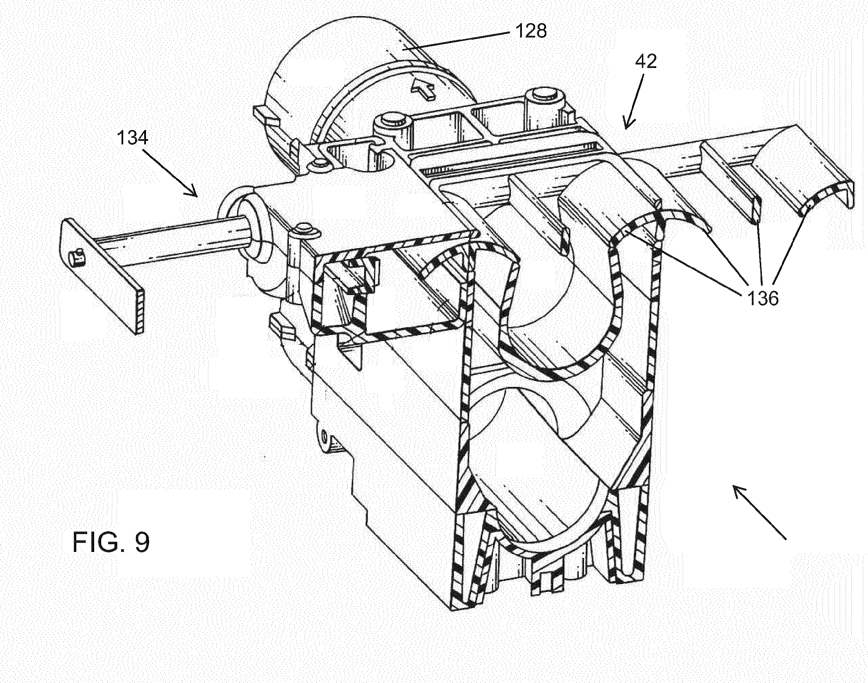

With reference to Figs. 7-9, the manifold 42 has an upper end 120 which is fastened to the lower end 74 of the meter housing 70. The manifold has eight cavities 124 at the upper end that align with the eight cavities 84 of the outlet passage 80 in the meter housing. The manifold 42 has an upper rank 126 of tubes 128 that connect to an upper set of the conduits 38. The manifold further has a lower rank 130 of tubes 132 that connect to a lower set of conduits 38. An adjustable valve 134 is slidable in the manifold and has convex valve members 136 that direct the product to either the upper rank or the lower rank of tubes. The valve 134 is shown in one position in Fig. 8 directing the product to the lower rank 130 of tubes and in the opposite position in Fig. 9 directing the product to the upper tubes.

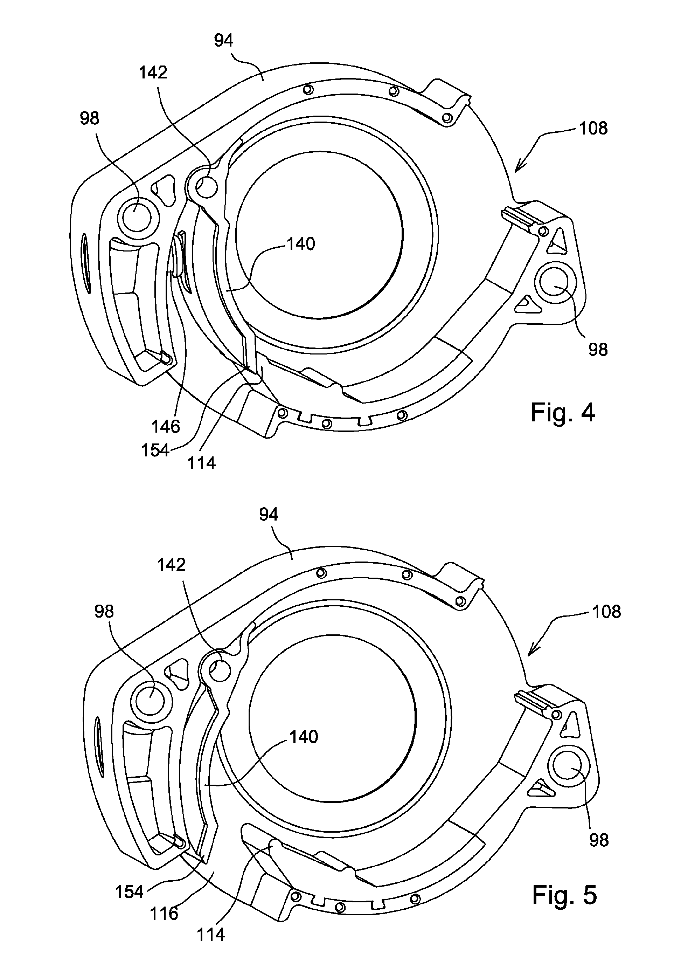

For each meter casing 94, a shut-off gate 140 is provided to selectively stop and start the flow of product through the product flow passage associated with that section of the meter. A shut-off gate is shown in Fig. 4 in the closed position preventing product from flowing over the ledge 114. The shut-off gate 140 is pivotally mounted to the meter casing at pivot 142 near a proximal end of the gate. A pivot rod 144, Fig. 3, extends axially through the cartridge 90 to pivotally mount the shut-off gates 140. Each gate 140 is held in the closed position by a plunger 146 that is moved within a sleeve 148 in the meter casing 94. Actuators 150 are mounted to the meter housing 70. The actuators have an extendable rod 152 which extends into the sleeve 148 and bears against the plunger 146 as shown in Fig. 6 when the actuator is in the energized state.

A meter casing and shut-off gate are shown in greater detail in Figs. 4 and 5. In Fig. 4 the gate 140 is shown in the closed position in which a distal end 154 of the gate bears against or is adjacent the ledge 114 to prevent product from flowing over the ledge. In Fig. 5, the gate is shown in the open position, spaced from the ledge 114, allowing product to flow over the ledge to the outlet 80. The gate 140 is biased by a spring mechanism, not shown, to the open position so that in a failure mode of the actuators 150, the machine can still be used to distribute product only without the ability to stop sections of the meter to avoid product overlap. More details of the gate structure and the actuators can be found at US 2012-0067258-A1, incorporated herein by reference.

The gate 140 is operable to stop flow of the product by blocking the meter casing outlet. Other mechanisms for doing the same are described in US 2010-0307394-A1 and US 2010-0307395-A1 which show other gate mechanisms for closing the meter outlet, both of which are incorporated herein by reference. Product flow can also be stopped by blocking the flow of product into the meter as described in US 7,690,440 B2 also incorporated herein by reference. Product flow can further be stopped by stopping the rotation of the meter roller 100. A device for doing so is shown in US 8,196,534 B2 incorporated herein by reference. Other means may be used to disconnect sections of a meter roller from the drive. One example of this is the Zone Command and Auto Zone Command^{™} available from Seed Master of Emerald Park, Saskatchewan, Canada which uses an air cylinder to disengage gears on the metering rollers to stop and start the product flow. Product flow through the product flow passages can also be stopped by control means located in the product flow passages downstream of the meter. For example, US 7,555,990 B2, incorporated herein by reference, shows valves diverting the flow of product from the secondary distribution lines 58 to stop the product flow.

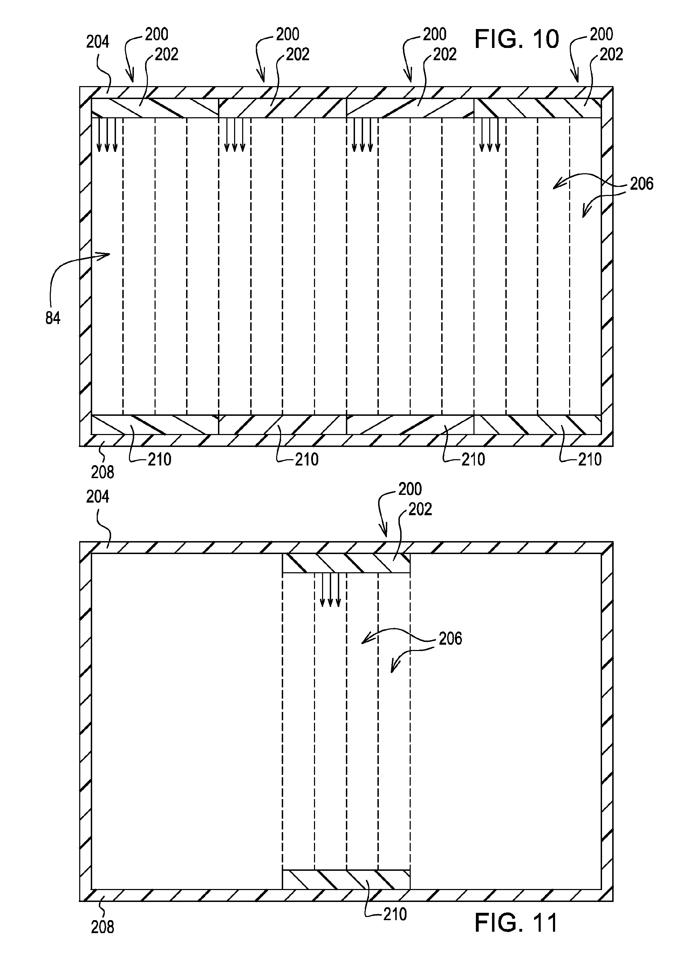

Fig. 6 shows sensors 200 in each cavity 84 in the meter housing outlet. The sensors are used to measure the product flow rate from each meter casing of the meter. The sensors 200 are shown in detail in Fig. 10 and include a radiation emitter 202 on one wall 204 of the cavity with the radiation directed across the cavity in parallel columns or channels 206. Each sensor has four columns and with four sensors, there are a total of sixteen columns. Depending on the size of the cavity and the desired sensor resolution, more or fewer sensor channels can be used over the width of the cavity. On the opposite wall 208 of the cavity, the sensors 200 include four radiation detectors 210 for receiving radiation from the emitters 202. The detectors produce an output signal indicative of the flow rate of product through each of the sixteen columns or channels 206. The sensors are described in more detail in US 2010-0264163 A1, incorporated herein by reference. The output signals from the sensors 200 are directed to a controller 232 where the total product flow rate is determined by adding the flow rate from the signals from all the radiation detectors 210.

Fig. 1 shows an alternative arrangement with only one sensor 200 having four channels 206 across the cavity. This single sensor 200 only covers a portion of the width of the sensor. However, studies have indicated that the flow of product through the cavity 84 is sufficiently uniform that it is possible to determine the total product flow rate by only detecting the flow rate through a portion of the cavity cross-section.

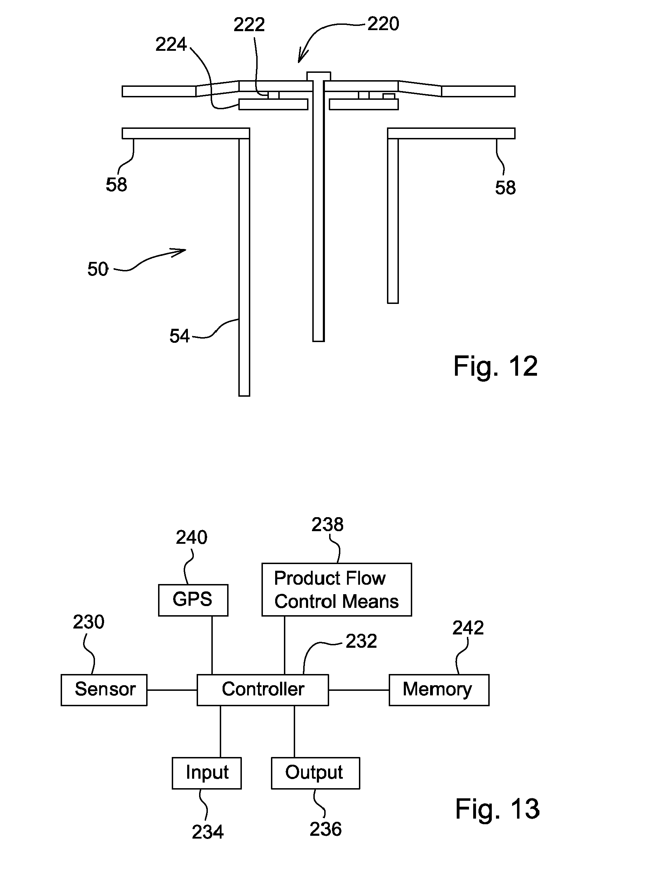

The sensors 200 can be placed in the cavities 84 in the meter housing outlet as shown in Fig. 6 or in the cavities 124 of the manifold 42 or along the length of the conduits 38 as desired. Sensors can also be placed in the secondary distribution lines 58. Although various types of radiation may be used in the sensors, visible or invisible, the various types of sensors will be collectively referred to as "optical sensors." Alternatively, an impact mass flow sensor 220, Fig. 12, can be deployed in the secondary distributing manifolds 52. The impact sensor 220 includes a washer type of load cell 222 connected to a larger washer-shaped impact plate 224 at the top of the upright tube 54. The diameter of the impact plate 224 is approximately equal to the diameter of the tube 54 so that substantially all the product delivered through the tube 54 impacts the plate 224 before exiting through the secondary distribution lines 58. Although the impact plate 224 is shown as flat, other surface shapes may also be used that can help to more evenly distribute the product to the lines 58.

A schematic diagram of the control system is shown in Fig. 13. there the sensors 230, which can be either the optical sensors 200 or the impact sensors 220, are shown connected to a controller 232 whereby the controller 232 receives the output signals from the sensors. An input device 234 is provided for operator inputs to the controller which can include a touch screen, a memory reader device or a connection to other device to transfer information to the controller 232 such as field shape and size, seeding prescription in terms of rate, etc., and the path plan. The controller 232 preferably includes a memory device. An output 236 preferably includes a display for viewing by an operator. It may also include a connection to an external device or a removable memory device. The controller 232 is also coupled to a control means 238 such as the actuators 150 to control the gates 140. The term "control means" is to be broadly construed to include the actuators of the various product flow stopping devices in the above referenced documents. A position input device, such as a GPS receiver 240 is also coupled to the controller 232. The position inputs enable the controller to determine when the device is overlapping a portion of the field that already has had the input applied or will have the input applied in a subsequent pass. The location information is used to operate the control means for stopping and starting the product flow. A memory 242 is also provided for storing data such as the product flow rate. The data may be downloaded via the output 236 or through other means. The sensors 230, controller 232 and associated devices constitute a monitoring device for the product distribution system.

The controller 232 receives the output signals from the product flow sensors 230. The controller also sends output signals to the product flow control means to actuate the various types of flow control mechanisms to shut off the flow of product. If the associated sensor for a product distribution passage for which the product flow has been shut-off still produces an output signal indicating product flow, the controller will recognize a malfunction of the product flow control means or the sensor and send an alert to the output device 236, preferably in the form of an audible or visual alarm. This alerts the operator of the need to take corrective action. The detecting of product flow can occur by measuring the flow across the entire width of the cavity as shown in Fig. 10 or by measuring the flow across only a portion of the width as shown in Fig. 11. The particular architecture of the monitoring device is not critical. For example, a separate controller can be used to control the product flow control means 238 and would be in communication with the controller 232.

Having described the preferred embodiment, it will become apparent that various modifications can be made without departing from the scope of the invention as defined in the accompanying claims.

## Claims

1. A monitoring device for a product distribution system (34), the monitoring system comprising: a plurality of flow sensors (200, 220, 230) adapted to measure product flow through product flow passages (38, 50, 58, 84, 124) of a product distribution system, each sensor (200, 220, 230) generating an output signal indicative of the flow rate of product past the sensor (200, 220, 230), and a controller (232) adapted to receive the sensor output signals and calculate a total mass flow through said passages (38, 50, 58, 84, 124).

2. The monitoring device of claim 1 further comprising a display (236) to show the total mass flow.

3. The monitoring device of claim 1 or 2 further comprising a memory (242) in which the controller (232) stores mass flow data.

4. The monitoring device of one of the claims 1 to 3 wherein the sensors (200, 220, 230) detect the flow of product through only a portion of a cross sectional area of each said product flow passage (38, 50, 58, 84, 124).

5. The monitoring device of one of the claims 1 to 4 wherein the sensors (230) are optical sensors (200) detecting flow through multiple sensor channels extending across the product flow passages (38, 50, 58, 84, 124).

6. The monitoring device of one of the claims 1 to 5 wherein the sensors (230) are mass flow impact sensors (220).

7. A product distribution system (34) comprising: a container (12, 14) for holding a product to be distributed, a meter assembly (40) for controlling discharge of product from the container (12, 14), a plurality of product flow passages (38, 50, 58, 84, 124) through which product flows downstream of the meter (40), **characterized in** comprising a monitoring device according to one or more of the above mentioned claims.

8. A product distribution system (34) according to claim 7 further comprising control means (238) for selectively stopping the product flow through the product flow passages (38, 50, 58, 84, 124) wherein the controller (232) is adapted to send control signals to the control means (238) to stop product flow through one or more product flow passages (38, 50, 58, 84, 124) and wherein the controller (232) is adapted to compare the measured product flow rate with an expected flow through each product flow passage (38, 50, 58, 84, 124) based on a commanded operation of the control means (238) to determine if the control means (238) is functioning properly.
